Europäisches Patentamt

European Patent Office

Office européen des brevets

(19)

(11) Veröffentlichungsnummer: **0 127 058**

**B1**

(12) **EUROPÄISCHE PATENTSCHRIFT**

(45) Veröffentlichungstag der Patentschrift:
14.12.88

(21) Anmeldenummer: 84105477.8

(22) Anmeldetag: 14.05.84

(51) Int. Cl.⁴: **G 11 B 5/55**, H 01 F 7/14,
G 11 B 21/02

ERRATUM

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | LAUTET BERICHTIGT:<br>SHOULD READ :<br>DEVRAIT ETRE LU : |
|---|---|---|---|---|
| Kp, also etwa 10 H, | 4 | 5 | 47 | Kp, also etwa 10 N |
| Abfall bis ca. 1 kKz, | 4 | 5 | 58 | Abfall bis ca. 1 kHz, |
| aber ohne Kopfe, | 4 | 6 | 13 | aber ohne Köpfe, |
| Antriebsmoment bei bener | 5 | 7 | 9 | Antriebsmoment bei kleiner |

Tag der Entscheidung )
über die Berichtigung )
Date of decision on )   16.03.89
rectification:          )..................
Date de décision portant )
sur modification:       )

Ausgabe- und Ver- )
öffentlichungstag: )
Issue and publication )   10.05.89
date:                  )..................
Date d'edition et de )
publication:           )

Patbl.Nr)

89/1

EPB no:).....

Bull. no:)

## Europäisches Patentamt

## European Patent Office

## Office européen des brevets

(19)

(11) Veröffentlichungsnummer: **0 127 058**
**B1**

(12) # EUROPÄISCHE PATENTSCHRIFT

(45) Veröffentlichungstag der Patentschrift:
14.12.88

(51) Int. Cl.⁴: **G 11 B 5/55,** H 01 F 7/14,
G 11 B 21/02

(21) Anmeldenummer: 84105477.8

(22) Anmeldetag: 14.05.84

(54) Vorrichtung zum Positionieren von Gegenständen, insbesondere von Magnetköpfen.

(30) Priorität: 21.05.83 DE 8315140 U

(43) Veröffentlichungstag der Anmeldung:
05.12.84 Patentblatt 84/49

(45) Bekanntmachung des Hinweises auf die Patenterteilung:
14.12.88 Patentblatt 88/50

(84) Benannte Vertragsstaaten:
AT CH DE FR GB IT LI NL

(56) Entgegenhaltungen:
EP-A-0 060 358
EP-A-0 069 546
EP-A-0 074 467
EP-A-0 089 277
DE-U-7 716 251
GB-A-2 073 501
GB-A-2 103 430

REVIEW OF THE ELECTRICAL COMMUNICATION
LABORATORIES, Band 30, Nr. 1, 1982, Seiten 46-56,
Tokyo, JP; Y. MITSUYA et al. "Mechanisms for 3.2
Gbyte multi-device disk storage"
IEEE TRANSACTIONS ON MAGNETICS, Band.
MAG-17, Nr. 4, Juli 1981, Seiten 1392-1395, New
York, US; R.C. WINFREY et al.: "Design of a high
performance rotary positioner for a magnetic disk
memory"
PATENT ABSTRACTS OF JAPAN; & JP - A - 56 134

(73) Patentinhaber: BASF Aktiengesellschaft, Carl-
Bosch- Strasse 38, D-6700 Ludwigshafen (DE)

(72) Erfinder: Manzke, Klaus, Schulstrasse 10, D-6721
Westheim (DE)
Erfinder: Hammerschmitt, Peter, Elsterweg 1,
D-6835 Bruehl (DE)
Erfinder: Schneider, Richard, Dr., Keplerstrasse 81,
D-6900 Heidelberg (DE)

(56) Entgegenhaltungen: (Fortsetzung)
363 (NIPPON DENKI) 21-10-1981

EP 0 127 058 B1

## Beschreibung

Die Erfindung betrifft eine Vorrichtung gemäß dem Oberbegriff des Anspruchs 1.

Mit dem DE-U-7 716 251 ist eine Vorrichtung zum Positionieren von Magnetköpfen auf Magnetspuren in einem Magnetplattenspeicher bekannt, wobei mehrere Magnetköpfe mit jeweils eigenem Kopfträger mit Antriebsspule schichtweise zu einem Schwenkarm stapelbar sind.

Ein ähnliches Positioniersystem ist mit der DE-OS-3 228 150 bekannt, bei dem eine Mehrzahl von einzelnen Schwingbetätigern mit je zwei Magnetköpfen auf einer Drehachse von hoher Steifigkeit dicht zusammengebaut sind, wobei die Vibrationen zwischen benachbarten Betätigern möglichst wenig übertragen werden sollen.

Es wurde in der Praxis festgestellt, daß alle geschichteten oder gestapelten Kopfträger-Anordnungen ein nachteiliges Schwingverhalten aufweisen, wodurch sie für sehr hohe Beschleunigungen der Schwenkarme und Genauigkeit bei der Positionierung auf extrem schmalen Spuren nicht mehr verwendbar sind.

Mit der DE-OS-3 107 225 ist ein Schwenkpositionierer für Magnetköpfe bekannt, der ebenfalls aus einer Anzahl aufeinander geschichteter, flacher Magnetkopfträgerarme besteht, wobei jeder Magnetkopfträgerarm freitragend an einem U-förmigen Rotorglied befestigt ist, das über Permanentmagnete mittels eines etwa halbkreisringförmigen Elektromagneten mit mindestens einer Spule drehantreibbar ist. Jedes Rotorglied besitzt einen sehr kleinen Radius und jeder Magnetkopfträgerarm weist eine sich in der Breite und in der Höhe verjüngende, flache Bauweise auf, so daß sich möglichst kleine Trägkeitsmomente ergeben. Die Masse des Rotorglieds und des Kopfträgerarms sollen genau einjustierbar sein bezüglich eines Gewichtsausgleichs um die Drehachse zur Vermeidung von Unwuchten. Praktische Lösungen dafür sind jedoch der Druckschrift nicht zu entnehmen.

Trotz dreieckiger Stützflächen am Befestigungsende jedes Kopfträgerarms, die die mechanische Festigkeit der Gesamtanordnung erhöhen sollen, ist eine ausreichende Biegesteifigkeit der bekannten Anordnung nicht erreichbar.

Mit der EP-OS-74 467 ist ein stapelbarer Kopfträger für zwei oder vier Magnetköpfe bekannt, der aus zwei parallelen Schienen mit C-Querschnitt und Brückengliedern dazwischen besteht. Auch eine solche Stapelanordnung kann die mechanischen Schwingeigenschaften für eine Positionierung bei sehr hoher Aufzeichnungsdichte nicht erfüllen.

Die Erfindung hat sich die Aufgabe gestellt, eine Positioniervorrichtung der eingangs definierten Art gegenüber den bekannten Vorrichtungen zu verbessern und unabhängig von der jeweiligen Anzahl der zu positionierenden Gegenstände gleiche Positionierkennwerte der Vorrichtung erreichbar zu machen. Die Erfindung soll insbesondere für hohe Aufzeichnungsdichten bei sehr kleinen Spurbreiten bis zu 20 μm oder weniger geeignet sein.

Die Aufgabe wird mit einer Vorrichtung gemäß dem Anspruch 1 gelöst.

Damit werden hohe Positioniergenauigkeiten bei geringerem elektronischen Regelaufwand, insbesondere bei Aufzeichnungssystemen für hohe Spur- und Datendichten, erreichbar.

Zweckmäßig ist der einzige Armteil mit Befestigungsmitteln für Halterungen, z. B. verschiedene Kopftürme, mit unterschiedlicher Kopfanzahl ausgebildet, so daß ein und derselbe Schwenkarm für verschiedenartige Positioniersysteme, z. B. für Magnetplattenspeichersysteme mit unterschiedlicher Plattenanzahl bzw. mit unterschiedlichen Plattengrößen zweckmäßig verwendbar wird. Der jeweilige Kopfturm kann damit einfach an die Geometrie der Aufzeichnungsfläche jedes Plattentyps individuell angepaßt ausgebildet werden.

Zweckmäßig besitzt der im wesentlichen einzige Armteil eine relativ geringe Masse und ist an einem Antriebs-Armteil mit relativ großer Masse befestigt. Dadurch werden extrem hohe Positioniergeschwindigkeiten ermöglicht. Praktisch kann der Antriebs-Armteil mit mindestens einem Dauermagnetpaar für die Antriebseinrichtung und der ruhende Teil der Antriebseinrichtung als Stator mit wenigstens einer flachen Spule ausgebildet sein. Damit ist ein äußerst schneller und raummäßig und steuerungsmäßig günstiger Antrieb des Schwenkarms realisierbar.

In praktisch günstiger Ausführung kann das Masseverhältnis zwischen dem einzigen Armteil mit der Halterung und dem Antriebsarmteil etwa zwischen 1 : 3 und 1 : 7, vorzugsweise bei etwa 1 : 5 liegen. Mit dem Vorzugswert von 1 : 5 wird beispielsweise für einen 5 1/4-Zoll Speicher das optimale Massenverhältnis erreicht.

Günstig ist es in jedem Fall, wenn der Schwerpunkt der aus Schwenkarm und Antriebseinrichtung bestehenden bewegten Einheit mindestens in unmittelbarer Nähe der Schwenkachse, insbesondere in der Schwenkachse liegt.

In vorteilhafter Ausführung besitzt der einzige Armteil eine kasten- oder wabenförmige Ausbildung von hoher Festigkeit. Zweckmäßig im Hinblick auf Masse, Festigkeitswerte und Herstellbarkeit besteht der einzige Armteil überwiegend aus Magnesium.

Vorteilhaft ist es ferner, die Halterung bzw. den Kopfturm mit auswechselbar befestigten Kopfträgern auszubilden, so daß jeder einzelne Träger oder Kopf einfach ausgetauscht oder repariert werden kann.

Im Hinblick auf eine Masseverkleinerung ist es möglich, die Hohlräume des einzigen Armteils auszuschäumen, um die geforderten Festigkeitswerte einhalten zu können.

In fertigungs- und antriebsmäßig vorteilhafter Ausbildung kann der Antriebs-Armteil die größte Masse in einem halbkreisringförmigen Flußleitstück enthalten. Eine ausgewogene Anordnung wird erhalten, wenn das Drehmoment des Flußleit-Stückes etwa dem des Kopfturmes entspricht.

Zweckmäßig ist auch die Verwendung einer einstellbaren Schwenkbegrenzung für den Schwenkarm, die zum Anschlagschutz mit zeitlichen Anschlagbremsen ausgebildet ist.

Einzelheiten der Erfindung sind dem in der Zeichnung dargestellten Ausführungsbeispiel, das nachfolgend beschrieben wird, zu entnehmen.

Es zeigen:

Figur 1    einen schematischen Aufzeichnungsplattenspeicher mit erfindungsgemäßen Positionierer

Figur 2    einen Vertikalschnitt durch den Positionierer gemäß Figur 1, Schnittlinie 2-2'

Figur 3    einen Horizontalschnitt durch den hinteren Teil des Positionierers

Figur 4a, 4b    schematische Darstellung der Antriebsspulen

Figur 5    einen Kopfturm

Figur 6    eine Draufsicht auf einen Teil des Schwenkarms mit daran befestigtem Kopfturm und Seitenanschlag

Der Plattenspeicher 5 besteht im wesentlichen aus mehreren koaxial (um die Achse Y) angeordneten, drehantreibbaren Platten 6 und einem am Umfang gelagerten Schwenkarmpositionierer 7. Letzterer ist zusammengesetzt aus einer Antriebseinrichtung 8, einem zu verschwenkenden, im wesentlichen einzigen Armteil 9 und eine Halterung (Kopftrageinrichtung) für die Abtastköpfe, dem Kopfturm 10, am Armteil 9 befestigt. Die Antriebseinrichtung ist als etwa halbkreisringförmiger Stator 11 mit flachen Spulen 12 und 13 mit einem Rotor mit Dauermagnetplättchen 15 ausgebildet. Der Rotor ist dabei der bewegte Antriebs-Armteil 14, an dem der Armteil 9 starr befestigt ist. Die gesamte bewegte Einheit (9, 10, 14) ist mit der Welle 16 in Lagern 21, wie noch unten erläutert, in einem vorgegebenen Winkelbereich schwenkbar. Die Längsachse der Welle 16, die Schwenkachse des Arms 7, ist mit 30 bezeichnet.

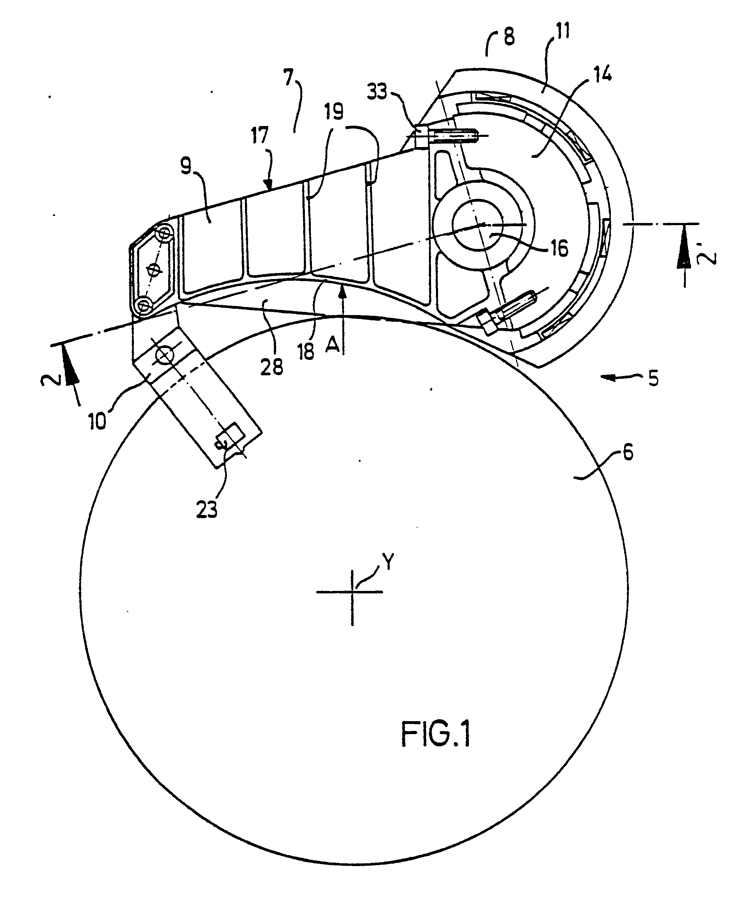

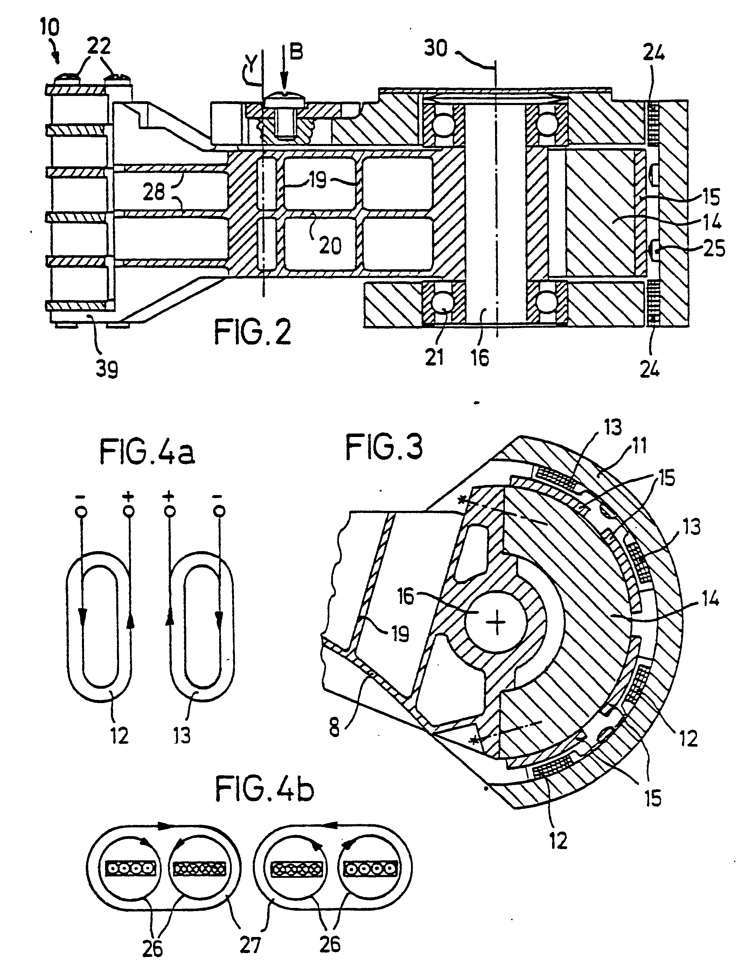

Wie in Figur 1 erkennbar, besteht der Armteil 9 aus einer Rippenkonstruktion mit mindestens einer Längsrippe und Querrippen 19 sowie einem Rand 17. Wie in Figur 2 sichtbar, sind die Rippen nach oben und unten abgedeckt und durch eine Kittelwandung 20 wird eine Ausbildung mit kastenförmigen Hohlräumen erhalten, die fertigungsmäßig günstig ist, da im Druckguß oder Spritzguß, z. B. aus Magnesium, eine wirtschaftliche Herstellung erzielbar ist.

Zweckmäßig wird der Armteil 9 einstückig hergestellt, um die unten erläuterten Steifigkeitswerte besonders in Bezug auf Biegung bei möglichst geringer Masse zu erhalten.

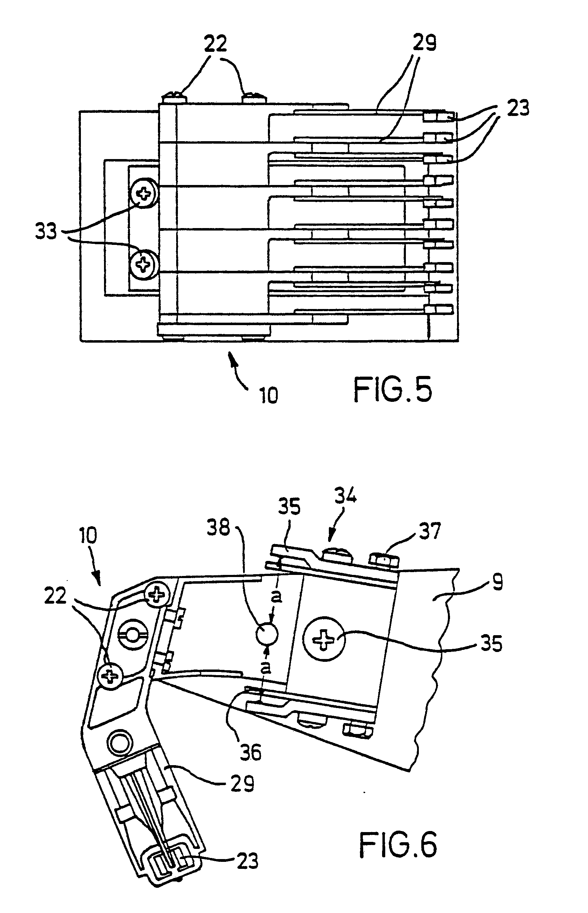

Die Rippenkonstruktion soll in jedem Fall so ausgelegt werden, daß die Mindest-Biegemoment erreicht oder besser überschritten werden. Dafür ist jede geeignete Bauweise, z. B. in Wabenform oder auch in Formen aus der Fachwerktechnik, benutzbar. Die Dicke der einzelnen Rippen 18 und 19 und der Wandung 20 ist noch verringerbar, wenn die Hohlräume ausgeschäumt werden, wobei der Hartschaum dann Tragfunktionen übernimmt. In dargestellten und beschriebenen Ausführungsbeispiel liegt zur Schwenkarmdarstellung in Figur 1 die Ausformebene in der Zeichenebene, so daß es überhaupt möglich ist, die Hohlräume des Armteils 9 in Figur 2 im Druckguß- oder Spritzgußverfahren auszubilden. Vom Rand 17 her ist der Armteil 9 vorzugsweise offen, da die Ausformöffnungen dort liegen. Der Kopfturm 10 ist hier für 10 Magnetköpfe oder für 5 Magnetplatten 6 ausgelegt. Mittels der Schrauben 22 ist der Kopfturm 10 am Armteil 9 befestigt. Jeder beliebig andere Kopfturm mit mindestens einem Magnetkopf 23, oder mehr oder weniger als 10 Magnetköpfen, ist dabei am Armteil 9 befestigbar ohne weitere wesentliche Änderung am Positionierer 7. In Figur 6 ist angedeutet, daß auch der Kopfturm 10 zweckmäßig eine Rippenkonstruktion besitzt zur Masseverringerung und Steifigkeits- und Stabilitätserhöhung in beiden Richtungen, s. die Pfeile A und B in Figuren 1 bzw. 2.

Es wurde gefunden, daß das Mindest-Biegemoment des Schwenkarms 7 (in Richtung des Pfeils B in Figur 2), genauer der Armteile 9 und 14, bei einseitiger Einspannung an der Quermittelachse, die durch die Welle 16 verläuft, bei einer Armdurchbiegung (Federweg) f = 14 µm am vorderen freien Armende $M_b = 0,15$ Nm betragen sollte, um bei Aufzeichnungsdichten von über 200 Spuren/cm ausreichend schnell und zuverlässig positionieren zu können. Die Durchbiegungen wurden mit einer Mikrometer-Meßuhr der Fa. Tesa, Schweiz, vom Typ ("Tesatast" mit einer Ablesegenauigkeit von 0,5 µm gemessen.

Der in den Zeichnungen dargestellte und hier beschriebene schematische Schwenkarm besitzt ein Biegemoment $M_b = 0,66$ Nm und kann je nach Dicke der Anzahl und Anordnung der Rippen Werte von Mb etwa im Bereich zwischen 0,3 Nm und 0,8 Nm aufweisen. Spurdichten zwischen ca. 200 und 400 Spuren/cm und höhere sind damit ohne weiteres erreichbar, wobei durch die hohen mechanischen Steifigkeits- und Stabilitätswerte die elektronischen Regeleinrichtungen, z. B. Servoeinrichtungen, nicht sehr aufwendig sein müssen, um hohe Positioniergenauigkeit und zuverlässigkeit bei hoher Positioniergeschwindigkeit erzielbar zu machen.

Zum Vergleich wurde ein Kopfarm ähnlich der DE-OS-3 107 225 eingespannt und das Biegemoment unter gleichen Versuchsbedingungen gemessen. Es ergab sich ein $M_b = 0,07$ Nm. Obwohl hier ein einzelner Kopfarm gemessen wurde und kein Stapel von miteinander verbundenen Kopfarmen, wie in der DE-OS-3 107 225 beschrieben, ist diese Messung für das Positionierverhalten jedes einzelnen Kopfarms maßgebend, da sie das Kriterium für seine Vertikalsteifigkeit ist. Ein Meßdiagramm der Kopfarm-Positioniergeschwindigkeit über der Schwingungsfrequenz dieses bekannten Kopfarms in Horizontalrichtung zeigt auch bereits im Bereich oberhalb von 1 KHz bis ca. 2,0 kHz starke Resonanzstellen, die unter anderem auf Vertikalschwingungen des Kopfarms zurückzuführen sind. Damit wird die Richtigkeit des gemessenen ungenügenden Biegemoments bestätigt.

Die erste Eigenresonanzstelle der Horizontalschwingung des bekannten Kopfarms liegt bei etwa 2,3 KHz, so daß damit eine Spurdichte von etwa 188 Spuren/cm (Herstellerangaben) erreicht werden soll. Obwohl damit in der Horizontalebene eine ausreichend hohe Resonanzfrequenz erreicht wird ist das Schwingverhalten in Vertikalrichtung mechanisch unzureichend, so daß schon wenig höhere Spurdichten nur über sehr aufwendige elektronische Dämpfungsmittel, wie Kerbfilter usw., notwendigerweise erzielbar wären oder über eine grundlegende mechanische Umkonstruktion des Kopfarms, etwa in Richtung der vorliegenden Erfindung.

Ein Vergleich der Biegesteifigkeit in der Horizontalebene ergab folgende Ergebnisse:

1) Einzelarm ähnlich DE-OS-3 107 225
Durchbiegung d = 4 μm
2) Schwenkarm gemäß Erfindung
Durchbiegung d = 3 μm

Dabei waren die übrigen Versuchsbedingungen dieselben. Die Belastungskraft F betrug bei den Messungen 1 Kp, also etwa 10 H, bei derselben Länge der Arme zwischen Einspannung und Angriffsstelle der Belastungskraft.

Damit wurde in der Größenordnung ein vergleichbarer Wert erhalten, obwohl auch hier der erfindungsgemäße Schwenkarm eine deutlich bessere Biegesteifigkeit aufwies.

Eine Bestätigung wurde in einer Messung der Schwenkarmgeschwindigkeit über der Schwenkarmschwingungsfrequenz erbracht, in der (in logarithmischem Maßstab) ein sehr linearer Abfall bis ca. 1 kKz, danach eine flache Aufwölbung und ein weiterer glatter Verlauf bis zur eindeutig ausgeprägten ersten Eigenresonanzstelle nahe oberhalb von $f_R = 2,4$ kHz gemessen wurde. Die Überhöhung der Resonanzamplitude gegenüber einem weiteren linearen Verlauf gegen 0 ((Schnittfrequenz mit der Frequenzachse ungefähr bei 16 kHz) betrug 15 dB im Vergleich zu einem Gesamtabfall von -80 dB von 100 Hz bis 16 kHz. Auch dieser Wert von $f_R = 2,4$ kHz liegt oberhalb der angegebenen bekannten Resonanzfrequenz von ca. f = 2,3 kHz.

Mit dem noch nachfolgend genauer beschriebenen Schwenkarm konnte eine Aufzeichnungsdichte von über 200 Spuren/cm bis ca. 400 Spuren/cm in der Praxis erreicht werden. Die Geschwindigkeits-Frequenzspektrums-Messung wurde mit einem Hewlett-Packard Spektrums-Analysator des Typs HP-5420 durchgeführt, wobei der Schwenkarm mit Kopfturm, aber ohne Köpfe, über einen Spulenstrom von 0,7 A ausgelenkt wurde in einem mittleren Spurbereich einer 5 1/4 Zoll Platte angeregt wurde.

Die Wandstärken im Armteil 9 können z.T. unterschiedlich ausgebildet sein, wie Figuren 2 und 3 zeigen. Erkennbar ist besonders die große Masse um die Welle 16, der Bereich, der sehr stabil und schwer ausgebildet sein muß.

Der auch halbkreisringförmige Armteil 14 ist mit dem Armteil 9 über Schrauben 33 befestigt. Der Armteil 14 besteht dabei im wesentlichen aus einem überdimensionierten Flußleitstück von großer Masse, an dessen Zylindermantel vier oder mehr axial angebrachte Dauermagnete 15 mit hohem Energiegehalt, insbesondere aus Kobalt-Samarium, befestigt sind. Diesen Magnetplättchen 15 gegenüber sind in Ruhestellung in Figur 3 die Längsleiter der flachen Rahmen-Spulen 12 und 13 angeordnet, deren Querleiter 24 außerhalb der Dauermagnetfelder angeordnet sind. Die Spulen 12 und 13 sind hier über Schrauben 25 am Stator 11 befestigt. Die Spulen 12 und 13 können in jeder geeigneten Art und Weise, z. B. auch als gedruckte Schaltungen, ausgebildet sein, wenn nur die Geometrie des Luftspalts in Figur 3 nicht wesentlich verändert wird. Die Dicke der Statorschale 11 ist optimiert, um mit minimalem Material, wie das Flußleitstück 14 aus hochkohlenstoffarmem Stahl bestehend, eine optimale Luftspaltinduktion von ca. 4000 Gauß (400 mT) zu erreichen. Die Magnetfeldlinien zwischen Dauermagneten 15 und den parallelgeschalteten Spulen 12 und 13 sind in Figuren 4a und 4b verdeutlicht. In dargestellten Beispiel hebt sich der magnetische Fluß der Spulenlängsleiter gerade auf, und es kommen nur die Magnetkräfte der Magnetplättchen 15 zur Wirkung. Die Magnetisierung des Dauermagnetkreises und die Bestromung der Spulen 12 und 13 werden so vorgenommen, daß die Magnetkräfte ein Antriebsmoment in derselben Richtung bewirken. Eine Links- oder Rechts-Schwenkung des Arms muß daher mit entsprechender Bestromung der Spulen 12 und 13 erfolgen. Das Zweispulen-System ermöglicht ein besseres Positionierverhalten. Soll voll beschleunigt werden, wird die Bestromung der Spulen so vorgenommen, daß die Antriebsmomente in eine Richtung wirken. Soll auf Position gefahren werden, wirken die Antriebsmomente, kurz vor Erreichen der Position gegeneinander. Hierdurch hat man das Schwingen um den Positionspunkt besser im Griff. Der Einschwingvorgang und damit die Positionierzeit werden kürzer.

Mit 26 sind die Feldlinien der Spulen 12 und 13 und mit 27 die der Dauermagnete 15 bezeichnet. Die vorliegende Zwei-Spulenanordnung wurde gewählt, um ein bei vorgegebenem Bauvolumen maximales Antriebsmoment bei bener Baugröße für den Schwenkarm zu erhalten. Bei größerer Masse oder Länge des Schwenkarms können weitere Spulen und Dauermagnete erforderlich sein. Eine durch zwei teilbare Spulen- und Dauermagnetanzahl ist jedoch aus Gründen der Kraft-Gegensteuerung bei einem Spurservo zweckmäßig. Die beschriebene Zweispulen-Anordnung ermöglicht ohne großen Aufwand mit dem beschriebenen Positionierer Zugriffszeiten von ca. 50 ms über den gesamten Hub.

Bei einem Strom pro Spule von 1,5 A bei ca. 4 Ω Widerstand und 120 Windungen entsprechend einer wirksamen Leiterlänge beider Spulen von 12,00 m, ergibt sich eine gesamte Schubkraft des Antriebs von 7 N (beide Spulen) und bei einem Abstand des Luftspaltes von der Drehachse von 30 mm ein Antriebsmoment von mehr als 20 Ncm.

Geometrie und Material des Armteils 9 sollen derartig gewählt werden, daß eine steife und leichte Bauform erreicht wird, die die Forderung nach einer hohen Schwingungsfrequenz des Schwenkarms erfüllt.

Beim Schwenkarm 7 (Armteile 9 und 14) der vorliegenden Erfindung wurde die Trennung zwischen Armteil 9 und der eigentlichen Kopfträgereinheit, z. B. den Kopfturm 10, auch aus Stabilitäts- und Massegründen vorgenommen. So liegen die Massen des einzigen (einstückigen) Armteils 9 mit einem Kopfturm und dem Antriebs-Armteil 14 etwa zwischen 1 : 3 und 1 : 7, vorzugsweise bei 1 : 5. Letzteres Verhältnis wurde mit den Massen 48 gr. und 244 gr in der Praxis erreicht. Bei leichter Verschiebung des Schwerpunkts (Massemittelpunkts) von der Drehachse um den Betrag einiger Millimeter können sich die beiden anderen, oben aufgeführten Masseverhältnisse ergeben, die in der Praxis auch noch zu gutem Schwingverhalten führen, bei denen das Antriebsmoment allerdings nicht so optimal ausgenutzt wird, im Unterschied zum Vorzugsverhältnis, bei dem Schwerpunkt und Drehachse praktisch exakt zusammenfallen. Durch Messungen wurde festgestellt, daß durch Hinzufügen oder Weglassen einzelner oder mehrerer der lösbaren Kopfträger vom Kopfturm 10 das Positionierverhalten, insbesondere die Schwingfrequenz, nur vernachlässigbar verändert wurde. Damit wird auch erreichbar, daß eine Veränderung der Kopfträger 29 auch während des Betriebs des Geräts vornehmbar ist, da der ganze Schwenkarm 7 im Positionierverhalten nicht mehr davon betroffen ist. Gegebenenfalls sind auch Ausgleichsgewichte, z. B. am Flußleitstück 14, vorsehbar.

Bei der Masseverteilung ist außerdem die Form der Einzelmassen maßgebend. So hat sich als zweckmäßig erwiesen, die Form des Flußleitstücks 14 exakt an die Form des Stators 11 anzupassen, um einen möglichst gleichmäßigen, optimalen Luftspalt mit maximalem Antriebsmoment zu erhalten. Die erfindungsgemäße Masseverteilung wurde auch deshalb vorgenommen, um unabhängig von der jeweiligen Betriebslage des Schwenkarms, entweder in horizontaler oder vertikaler Lage oder auch dazwischen dieselben guten und reproduzierbaren Positionierkennwerte zu erzielen.

Besonders günstig bei der Ausbildung des Armteils 9 hat es sich erwiesen, eine Seite dem Umfang der Platte 6 angepaßt auszubilden. In Figur 1 ist die Seitenlängsrippe 18 entsprechend kreisbogenförmig ausgebildet. Die unten und/oder obenliegende Sekantenwandungen 28 dienen zur zusätzlichen Versteifung und liegen bei völlig eingefahrenem Schwenkarm 7 zwischen benachbarten Platten 6 und beanspruchen dadurch keinen zusätzlichen Raum, was für Kompakt-Geräte sehr von Vorteil ist. Selbstverständlich ist es möglich, nur eine Sekantenwandung 28 auch ober- oder unterhalb der gesamten Plattenanordnung vorzusehen. Die Querrippen 19 sind auch nach Möglichkeit im wesentlichen radial zu den Plattenradien angeordnet, da die Festigkeit auch in dieser Richtung sehr groß sein muß.

Die Aufteilung des Schwenkarms in Armteil 9 und ankoppelbarer Kopfträgereinheit hat auch den weiteren Vorteil, daß eine rationelle Einzelteilfertigung erfolgen kann und durch wenig hochtoleranzbearbeitete Flächen eine unproblematische Montage der Bauteile vornehmbar ist.

In Figur 5 ist die Kopfträgereinheit, ein Kopfturm 10 mit 10 Köpfen und 10 auswechselbaren Kopfträgern 29 gezeigt. Der Kopfturm 10 enthält auch einen Rahmenkörper 32, der auch in Rippenbauweise, vorteilhaft auch überwiegend, ca. 95 % in Magnesium ausgebildet ist. Mit Befestigungsschrauben 22 ist der gesamte Kopfturm 10 vom Armteil 9 lösbar und z. B. gegen einen Turm mit unterschiedlicher Kopfanzahl austauschbar. Unten ist der Kopfturm 10 auf eine Plattform 39 am Armteil 9 aufgesetzt, die ein Höhenlagen-Normal bildet.

In Figur 6 ist der Kopfturm 10 von oben, mit angebrachten Schwenkbegrenzung 34 dargestellt. Um die Schraube 35 als Drehpunkt ist die Schwenkbegrenzung drehbar und einstellbar angebracht, damit der Einzelkopf 23 symmetrisch zu seinem optimalen Anstellwinkel zur Magnetspur der Platte 6 ausrichtbar ist. Die Schraube 39 dient zur Einstellung der Schwenkbereichslage der Köpfe 23, außerdem auch zum Feststellen der Schwenkbegrenzung 34. Seitenanschläge 35 dienen als Endanschläge. Parallel dazu sind Bremsblattfedern 36 vorgesehen, die in der Endphase des maximalen Schwenkbereichs (a) eine Dämpfung oder Bremsung auf den Schwenkarn ausüben. Die Federn 36 sind entsprechend der Gesamtmasse der bewegten Armteile 9, 14 und des Kopfturms 10 ausgelegt, um ein Anschlagen zu verhindern. Justageschrauben 37 gestatten ein individuelles Justieren der Seitenanschläge 35 zum Schwenkarm. Da die Schwenkbegrenzungseinheit 34 vorzugsweise oberhalb des Schwenkarms 7, genauer des Armteils 9, angebracht ist, um kein Hindernis bei der Schwenkung darzustellen und um zur Justage bei eingebauten Positionierern leicht zugänglich zu sein, kommt nicht der Armteil 9 selbst sondern ein Mittelzapfen 38 mit den Federn 36 und somit gegebenenfalls mittelbar mit den Seitenanschlägen 35 in Wirkkontakt. Dadurch wird auch der Vorteil eines größeren Schwenkbereichs gemäß Pfeilen a in Figur 6 erreicht. Die Schwenkbegrenzung 34 ist als Baugruppe vormontierbar und einfach an Positionierer befestigbar und auch wieder davon lösbar.

Die Positioniervorrichtung und ein Magnetplattenspeicher-Laufwerk wurden oben beschrieben. Selbstverständlich ist die Verwendung einer solchen Positioniervorrichtung nicht auf diese Anwendung beschränkt. Es ist z. B. denkbar, daß wegen ihrer hohen Steifigkeit und der günstigen Masseverteilung und/oder des ausgezeichneten Schwingverhaltens die Vorrichtung für Schallplattenspieler usw., Videoplattenspieler (magnetisch, optisch oder elektrisch) sowie auch für industrielle Roboter eingesetzt wird.

**Patentansprüche**

1. Vorrichtung zum Positionieren von mindestens einem Gegenstand geringer Masse in Bezug auf mindestens einen zweiten Gegenstand, insbesondere von Magnetköpfen auf ausgewählte Magnetspuren von mindestens einer mit einem Antrieb kuppelbaren Magnetplatte (6) in einem Magnetplattenspeicher (5), in der wenigstens ein um eine Schwenkachse schwenkbarer Schwenkarm mit einem Halterung für den mindestens einen zu positionierenden Gegenstand (23) und eine Schwenkarmantriebseinrichtung vorgesehen sind, dadurch gekennzeichnet, daß der Schwenkarm zwischen der Schwenkachse (30) und der Halterung des mindestens einen zu positionierenden Gegenstandes (23) aus im wesentlichen einem einzigen Armteil (9) besteht, der parallel zur Schwenkachse (30) ein Biegemoment von mindestens 0,15 Nm und vorzugsweise zwischen 0,3 und 0,7 Nm aufweist bei einer Durchbiegung von 14 µm.

2. Vorrichtung nach Anspruch 1, dadurch gekennzeichnet, daß der zu positionierende Gegenstand ein Abtastkopf (23) und der zweite Gegenstand eine drehbar antreibbare Aufzeichnungsplatte (6) ist und die Halterung (10) ausgebildet ist.

3. Positioniervorrichtung nach Anspruch 1 und 2, dadurch gekennzeichnet, daß der einzige Armteil (9) mit Befestigungsmitteln (22) für Kopftürme (10) mit unterschiedlicher Kopfanzahl ausgebildet ist.

4. Vorrichtung nach Anspruch 1 oder 2 oder 3, dadurch gekennzeichnet, daß der im wesentlichen einzige Armteil (9) eine relativ geringe Masse besitzt und an einem Antriebs-Armteil (14) mit relativ großer Masse befestigt ist.

5. Vorrichtung nach Anspruch 1 oder 2 oder 3, dadurch gekennzeichnet, daß der Antriebs-Armteil (14) mit mindestens einem Dauermagnetpaar (15) für die Antriebseinrichtung und der ruhende Teil der Antriebseinrichtung als Stator (11) mit wenigstens einer flachen Spule (12, 13) ausgebildet ist.

6. Positioniervorrichtung nach Anspruch 1 oder 2, dadurch gekennzeichnet, daß das Masseverhältnis zwischen dem einzigen Armteil (9) mit einer Halterung und dem Antriebs-Armteil (14) etwa zwischen 1 : 3 und 1 : 7, vorzugsweise bei etwa 1 : 5 liegt.

7. Positioniervorrichtung nach Anspruch 1 bis 6, dadurch gekennzeichnet, daß der Schwerpunkt der aus Schwenkarm und Antriebseinrichtung (9 und 14) bestehenden bewegten Einheit mindestens in unmittelbarer Nähe der Schwenkachse (30), insbesondere in der Schwenkachse (30) liegt.

8. Positioniervorrichtung nach einem der Ansprüche 1 bis 7, dadurch gekennzeichnet, daß der einzige Armteil (9) eine kasten- oder wabenförmige Ausbildung besitzt.

9. Positioniervorrichtung nach Anspruchs 8, dadurch gekennzeichnet, daß der einzige Armteil (9) überwiegend aus Magnesium besteht.

10. Positioniervorrichtung nach Anspruch 2 oder 3, dadurch gekennzeichnet, daß die Halterung als Kopfturm (10) mit auswechselbar befestigten Kopfträgern (29) ausgebildet ist.

11. Positioniervorrichtung nach Anspruch 8, dadurch gekennzeichnet, daß die Hohlräume (31) des einzigen Armteils (9) ausgeschäumt sind.

12. Positioniervorrichtung nach einem der Ansprüche 1 bis 6, dadurch gekennzeichnet, daß der Antriebs-Armteil (14) seine größte Masse in einem halbkreisringförmigen Flußleitstück enthält.

13. Positioniervorrichtung nach Anspruch 1, 4 und 10, dadurch gekennzeichnet, daß das Drehmoment des Flußleitstücks in Bezug auf die Schwenkachse (30) etwa dem des Kopfturmes (10) entspricht.

14. Positioniervorrichtung nach einem der Ansprüche 1 bis 13, dadurch gekennzeichnet, daß der einzige Armteil (9) seitlich wenigstens teilweise dem Umfang der Aufzeichnungsplatte (6) angepaßt kreisbogenförmig ausgebildet ist.

15. Positioniervorrichtung nach einem der Ansprüche 1 bis 4, dadurch gekennzeichnet, daß eine Schwenkbegrenzungseinrichtung (34) für den Armteil (9) vorgesehen ist, die seitliche Anschläge (35) und Anschlagbremsen (36) enthält.

## Claims

1. Apparatus for positioning at least one article of small mass relative to at least one second article, in particular magnetic heads in relation to preselected magnetic tracks on at least one disk (6), which can be coupled to a drive motor, in a magnetic disk file (5), in which apparatus at least one swinging arm which can be rotated about a rotating axis and has a mounting is provided for the one or more articles (23) to be positioned and a drive motor for the swinging arm is provided, wherein, between the axis of rotation (30) and the mounting of the one or more articles to be positioned (23), the swinging arm essentially consists of a single arm section (9) which has a bending moment parallel to the axis of rotation (30) of not less than 0.15 Nm and preferably between 0.3 and 0.7 Nm when the deflection is 14 µm.

2. Apparatus as claimed in claim 1, wherein the article to be positioned is a scanning head (23) and the second article is a rotatably driveable recording disk (6) and the mounting is designed as a head tower (10).

3. Positioning apparatus as claimed in either of claims 1 or 2, wherein the single arm section (9) is designed with fixing means (22) for head towers (10) with different numbers of heads.

4. Apparatus as claimed in any of claims 1 or 2 or 3, wherein the essentially single arm section (9) has a relatively small mass and is attached to a driven arm section (14) which has a relatively large mass.

5. Apparatus as claimed in any of claims 1 or 2 or 3, wherein the driven arm section (14) is equipped with one or more pairs of permanent magnets (15) for the drive motor, and the stationary part of the drive motor is in the form of a stator (11) having one or more flat coils (12, 13).

6. Positioning apparatus as claimed in either of claims 1 or 2, wherein the ratio of the mass of the single arm section (9) with a mounting to that of the driven arm section (14) is from about 1 : 3 to 1: 7, preferably 1 : 5.

7. Positioning apparatus as claimed in any of claims 1 to 6, wherein the center of gravity of the moving assembly consisting of swinging arm and drive motor (9 and 14) is at least in the immediate vicinity of the axis of rotation (30), in particular in the axis of rotation (30).

8. Positioning apparatus as claimed in any of claims 1 to 7, wherein the single arm section (9) has a box-shaped or honeycomb structure.

9. Positioning apparatus as claimed in claim 8, wherein the single arm section (9) consists predominantly of magnesium.

10. Positioning apparatus as claimed in either of claims 2 or 3, wherein the mounting as head tower (10) is designed having exchangeable head supports (29).

11. Positioning apparatus as claimed in claim 8, wherein the cavities (31) of the single arm section (9) are filled with foam.

12. Positioning apparatus as claimed in any of claims 1 to 6, wherein the major part of the mass of the driven arm section (14) is concentrated in a semi-annular flux-conducting member.

13. Positioning apparatus as claimed in any of claims 1, 4 and 10, wherein the torque of the flux-conducting member relative to the axis of rotation (30) is approximately the same as that of the head tower (10).

14. Positioning apparatus as claimed in any of claims 1 to 13, wherein the single arm section (9) is designed in the form of an arc, laterally fitting the circumference of the recording disk (6) at least partially.

15. Positioning apparatus as claimed in any of claims 1 to 4, wherein a rotation-limiting means (34) is provided for the arm section (9) which contains lateral stops (35) and stop brakes (36).

## Revendications

1. Dispositif de positionnement d'au moins un objet de faible masse par rapport à au moins un second objet, en particulier de têtes magnétiques sur des pistes magnétiques choisies d'au moins un disque magnétique (6) accouplable à une commande, dans une mémoire à disques magnétiques (5), dans lequel sont prévus au moins un bras pivotant, capable de pivoter autour d'un axe de pivotement, muni d'un support pour l'"au moins un" objet (23) à positionner et un moyen d'entraînement de bras pivotant, caractérisé par le fait que le bras pivotant est constitué, entre l'axe de pivotement (30) et le support de l'"au moins un" objet à positionner (23), essentiellement d'une partie d'arbre (9) d'une seule pièce, qui possède, parallèlement à l'axe de pivotement (30), un moment de flexion d'au moins 0,15 Nm et avantageusement compris entre 0,3 et 0,7 Nm, pour une flèche de 14 µm.

2. Dispositif selon la revendication 1, caractérisé par le fait que l'objet à positionner est une tête de lecture (23) et le second objet est un disque d'enregistrement (6) entraînable en rotation et le support est agencé en tourelle de tête (10).

3. Dispositif de positionnement selon la revendication 1 et 2, caractérisé par le fait que la partie de bras d'une seule pièce (9) est dotée de moyens de fixation (22) pour tourelles de tête (10) à nombres de têtes différents.

4. Dispositif selon la revendication 1, 2 ou 3, caractérisé par le fait que la partie de bras d'une seule pièce (9) possède une masse relativement faible et est fixée à une partie d'entraînement de bras (14) de masse relativement grande.

5. Dispositif selon la revendication 1, 2 ou 3 caractérisé par le fait que la partie d'entraînement de bras (14) est dotée d'au moins une paire d'aimants permanents (15) pour le moyen d'entraînement et la partie fixe du moyen d'entraînement se présente sous forme de stator (11) à au moins une bobine plate (12, 13).

6. Dispositif de positionnement selon la revendication 1 ou 2, caractérisé par le fait que le rapport des masses entre la partie de bras d'une seule pièce (9) avec support et la partie d'entraînement de bras (14) est compris à peu près entre 1/3 et 1/7, et avantageusement d'environ 1/5.

7. Dispositif de positionnement selon la revendication 1 à 6, caractérisé par le fait que le centre de gravité de l'ensemble mobile consitué par le bras pivotant et le moyen d'entraînement (9 et 14) se trouve au moins au voisinage immédiat de l'axe de pivotement (30), en particulier sur l'axe de pivotement (30).

8. Dispositif de positionnement selon l'une des revendications 1 à 7, caractérisé par le fait que la partie de bras d'une seule pièce (9) est en forme de caisson ou de nid d'abeilles.

9. Dispositif de positionnement selon la revendication 8, caractérisé par le fait que la partie de bras d'une seule pièce (9) est constituée principalement de magnésium.

10. Dispositif de positionnement selon la revendication 2 ou 3, caractérisé par le fait que le support est formé par une tourelle de tête (10) à porte-tête (29) fixés de façon amovible

11. Dispositif de positionnement selon la revendication 8, caractérisé par le fait que les cavités de la partie de bras d'une seule pièce (9) sont remplies de masses expansées.

12. Dispositif de positionnement selon la revendication 1 à 6, caractérisé par le fait que la partie d'entraînement de bras (14) contient sa masse maximale dans une pièce-guide de flux de forme annulaire semi-circulaire.

13. Dispositif de positionnement selon la revendication 1, 4 et 10, caractérisé par le fait que le moment de rotation de la pièce-guide de flux par rapport à l'axe de pivotement (30) correspond à peu près à celui de la tourelle de tête (10).

14. Dispositif de positionnement selon l'une des revendications 1 à 13, caractérisé par le fait que la partie de bras d'une seule pièce (9) est en forme d'arc de cercle adaptée latéralement, au moins partiellement, à la périphérie du disque d'enregistrement (6).

15. Dispositif de positionnement selon l'une des revendications 1 à 4, caractérisé par le fait qu'il est prévu pour la partie de bras (9) un moyen de limitation de pivotement (34) qui contient des butées latérales (35) et des freins de butée (36).

FIG.1

FIG.2

FIG.4a

FIG.3

FIG.4b

FIG.5

FIG.6